# EUROPÄISCHE PATENTANMELDUNG

(11) **EP 2 708 291 A2**
(43) Veröffentlichungstag der Anmeldung: **19.03.2014**
(21) Anmeldenummer: 13183837.7
(22) Anmeldetag: 11.09.2013
(51) Int. Cl.: B06B 3/02

(54) **Sonotrodenhalterung**

(30) Priorität: 17.09.2012 DE 102012216584
(71) Anmelder: MS Spaichingen GmbH, 78549 Spaichingen (DE)
(72) Erfinder: Noder, Elmar, 78662 Bösingen (DE); Eder, Frank, 78549 Spaichingen (DE)
(74) Vertreter: Manitz, Finsterwald & Partner GbR

(57) **Zusammenfassung**

Es wird eine Sonotrodenhalterung zur schwingfähigen Befestigung einer Sonotrode an einem Träger angegeben, wobei eine Schwingungsrichtung von dem Träger zur Sonotrode verläuft und die Sonotrodenhalterung zumindest einen Schwingkörper mit zumindest einer Aussparung aufweist und der Schwingkörper an einem Ende mit der Sonotrode verbunden ist und eine Aufhängung aufweist, die zur Befestigung an dem Träger ausgebildet ist.

## Beschreibung

Die vorliegende Erfindung betrifft eine Sonotrodenhalterung zur schwingfähigen Befestigung einer Sonotrode an einem Träger, wobei eine Schwingungsrichtung von dem Träger zur Sonotrode verläuft.

Derartige Sonotrodenhalterungen sind beispielsweise aus Vorrichtungen zum Ultraschallschweißen bekannt, wobei die Sonotrode mittels eines Ultraschallkonverters angeregt und in mechanische Schwingungen versetzt wird. Die schwingende Sonotrode kann auf ein zu bearbeitendes Material aufgesetzt werden und überträgt ihre mechanischen Schwingungen an das zu bearbeitende Material. Durch diesen Energieeintrag kann das zu bearbeitende Material beispielsweise erhitzt werden, wodurch die Sonotrode zum Verschweißen bzw. Trennschweißen von verschiedenen Materialien, insbesondere von Kunststoffen, Folien, Vliese, Gewebe/Textilien und/oder Papier einsetzbar ist.

Voraussetzung für das Verschweißen des zu bearbeitenden Materials ist ein geringer Mindestanteil eines thermoplastischen Kunststoffs, welcher durch die Schwingungen der Sonotrode erhitzt wird und zu schmelzen beginnt. Der Kunststoff kann im geschmolzenen Zustand eine Verbindung mit weiteren Materialien eingehen.

Bei Schweißarbeiten mit einer Sonotrode oder einem Sonotrodenverbund kann ein sehr hoher Druck auf das zu bearbeitende Material benötigt werden. Somit können sehr starke Kräfte auf die Sonotrode oder den Sonotrodenverbund einwirken, welche insbesondere im Bereich von mehreren Kilonewton liegen können. Aus diesem Grund muss die Sonotrode bzw. die Sontroden mittels einer mechanisch stabilen Sonotrodenhalterung befestigt werden, so dass die in die Sonotrode eingeleiteten mechanischen Kräfte nicht zu einem "abtauchen" einzelner Sontroden führen, was Beschädigungen nach sich ziehen kann. Zudem müssen Sonotrodenhalterungen möglichst langlebig ausgebildet sein, d.h. einen geringen Verschleiß aufweisen.

Die Sonotrodenhalterung stellt eine exakte Führung bzw. Positionierung der Sonotrode während des Schweißens sicher. Dazu sind bereits verschiedene Sonotrodenhalterungen bekannt, beispielsweise offenbart die DE 20 2004 003 917 U1 eine Sonotrodenhalterung, welche zumindest vier Hilfsbooster umfasst, die schwingfähig in eine Sonotrode einsetzbar sind und einem Verkippen oder Verschwenken der Sonotrode entgegenwirken, wobei die Sonotrodenhalterung an die jeweils verwendete Sonotrode angepasst werden muss, d.h. die Geometrie der Sonotrodenhalterung muss an die verwendete Sonotrode angepasst werden.

Es ist eine der Erfindung zugrundliegende Aufgabe, eine universelle Sonotrodenhalterung anzugeben, welche mit Sonotroden verschiedener Bauart verwendet werden kann und zudem einen möglichst geringen Verschleiß aufweist.

Diese Aufgabe wird durch eine Sonotrodenhalterung mit den Merkmalen des Anspruchs 1 gelöst, und insbesondere dadurch, dass die Sonotrodenhalterung zumindest einen Schwingkörper mit zumindest einer Aussparung aufweist, wobei der Schwingkörper an einem Ende mit der Sonotrode verbunden ist und eine Aufhängung aufweist, die zur Befestigung an dem Träger ausgebildet ist.

Die Sonotrode ist somit nicht direkt mit der Aufhängung verbunden, sondern ist mit einem Schwingkörper gekoppelt, welcher mit angepasster Impedanz mit der Frequenz der Sonotrode mitschwingen kann und auf diese Weise die Aufhängung von Schwingungen entlasten bzw. fast gänzlich freihalten kann. Die Aussparung des Schwingkörpers kann dabei dazu dienen, die Resonanzfrequenz des Schwingkörpers an die Frequenz der Sonotrode anzupassen.

Erfindungsgemäß werden die Schwingungen der Sonotrode also an den Schwingkörper der Sonotrodenhalterung, im Wesentlichen aber nicht an die Aufhängung weitergegeben. Die an dem Träger befestigte Aufhängung ist somit weitgehend schwingungsfrei, wodurch die Anforderungen an eine Befestigung der Aufhängung an dem Träger reduziert werden können. Insbesondere wird auch der Träger durch die erfindungsgemäße Sonotrodenhalterung im Wesentlichen von Schwingungen freigehalten.

Zudem kann ein Verschleiß der Sonotrodenhalterung auf ein Minimum begrenzt bzw. komplett vermieden werden, da der Schwingkörper in Resonanz mit der Sonotrode mitschwingen kann. Unerwünschte Kräfte durch nicht angepasste Schwingfrequenzen zwischen dem Schwingkörper und der Aufhängung und/oder dem Träger können somit vermieden werden.

Vorteilhafte Ausführungsformen der Erfindung sind in der Beschreibung, den Zeichnungen sowie den Unteransprüchen beschrieben.

Nach einer ersten vorteilhaften Ausführungsform ist der Schwingkörper quaderförmig ausgebildet. Die Aufhängung ist dabei durch die Quaderform besonders einfach mit dem Schwingkörper zu verbinden.

Gemäß einer weiteren vorteilhaften Ausführungsform ist die Aussparung ein sich in Schwingungsrichtung erstreckendes Langloch. Ein Langloch ist produktionstechnisch ohne großen Aufwand herzustellen und kann in seiner Länge an die jeweilige Anwendung angepasst werden.

Nach einer weiteren vorteilhaften Ausführungsform kann die Aufhängung im Wesentlichen U-förmig ausgebildet sein und die beiden Schenkel der U-förmigen Aufhängung können in Schwingungsrichtung gesehen etwa in der Mitte des Schwingkörpers mit diesem verbunden sein.

Die im Wesentlichen U-förmige Aufhängung kann den beispielsweise quaderförmigen Schwingkörper von außen umgreifen. Dabei können die Schenkel der Aufhängung in etwa in der Mitte des Schwingkörpers mit diesem verbunden sein. Der Schwingkörper kann somit etwa zur Hälfte in der U-Form der Aufhängung aufgenommen werden. Eine zweite Hälfte des Schwingkörpers kann aus der U-förmigen Aufhängung herausragen.

Durch die resonante Schwingung des Schwingkörpers umfasst der Schwingkörper Zonen mit größeren und kleineren Amplituden der Ultraschallschwingung. Vorteilhafterweise erstreckt sich eine sogenannte Nulllinie, also eine Zone geringster Amplitude (Schwingungsknoten), in Schwingungsrichtung gesehen etwa in der Mitte des Schwingkörpers.

Somit wird die Verbindung mit der Aufhängung nur durch geringe Ausdehnungen durch die Amplitude belastet. Zudem werden auf diese Weise keine Schwingungen bzw. nur ein geringer Schwingungsanteil an die Aufhängung übertragen, wodurch ein Verschleiß der Sonotrodenhalterung auf ein Minimum reduziert wird.

Gemäß einer weiteren vorteilhaften Ausführungsform kann die Aussparung bzw. das Langloch etwa mittig zwischen den zwei Enden der Schenkel der U-förmigen Aufhängung in dem Schwingkörper angeordnet sein. Auf diese Weise kann ein symmetrischer Aufbau des Schwingkörpers erfolgen, wodurch sich ebenfalls eine symmetrische Schwingungsverteilung in dem Schwingkörper einstellen kann. Die Belastung der U-förmigen Aufhängung kann somit gleichmäßig auf beide Seiten verteilt werden, was ebenfalls zu einer Verschleißverminderung führen kann, da auftretende Kräfte gleichmäßig verteilt werden können.

Gemäß einer weiteren vorteilhaften Ausführungsform können die Aufhängung und der Schwingkörper einstückig ausgebildet sein. Dies führt insbesondere zu einer mechanisch besonders stabilen Sonotrodenhalterung, die starke statische und dynamische Kräfte aufnehmen kann. Insbesondere kann die erfindungsgemäße Sonotrodenhalterung starke einseitige Belastungen von mehreren Kilonewton aufnehmen, wobei sie bei derartigen Belastungen lediglich um wenige Mikrometer nachgibt.

Weiterhin kann der Schwingkörper abgerundete Ecken umfassen, was insbesondere eine einstückige Herstellung der Sonotrodenhalterung aus einem Materialblock erleichtert.

Gemäß einer weiteren vorteilhaften Ausführungsform kann die Aufhängung in einem Bereich der zwei Enden jeweils eine Aussparung umfassen, welche insbesondere dazu dienen kann, die Resonanzfrequenz des Schwingkörpers einzustellen.

Gemäß einer weiteren vorteilhaften Ausführungsform kann zwischen dem Schwingkörper und der Aufhängung ein im Wesentlichen U-förmig ausgebildeter Hohlraum angeordnet sein, wobei der Hohlraum die Aussparung der Aufhängung umfasst. Alternativ kann der Hohlraum auch V-förmig ausgebildet sein. Der Schwingkörper kann somit ungehindert schwingen, ohne dass er beim Schwingen an die Aufhängung stößt. Der Hohlraum kann somit eine ungehinderte Schwingung des Schwingkörpers ermöglichen. Weiterhin kann der Hohlraum in die Aussparungen übergehen, wodurch der Hohlraum die Aussparungen der Aufhängung umfasst.

Gemäß einer weiteren vorteilhaften Ausführungsform kann der Schwingkörper in Schwingungsrichtung gesehen im Wesentlichen die gleiche Länge aufweisen wie die Sonotrode. Auf diese Weise wird eine einfache Impedanzanpassung des Schwingkörpers an die Sonotrode gewährleistet. Es kann somit sichergestellt werden, dass der Schwingkörper in Resonanz mitschwingt, wenn sich die Sonotrode in Resonanz befindet, da für die Resonanzfrequenz des Schwingkörpers insbesondere die Länge des Schwingkörpers in Schwingungsrichtung verantwortlich ist.

Die Sonotrodenhalterung muss folglich bloß in ihrer Größe variiert bzw. skaliert werden, um an beliebige Resonanzfrequenzen beliebiger Sonotroden angepasst zu werden. Der prinzipielle Aufbau der Sonotrodenhalterung kann unabhängig von der verwendeten Sonotrode gleich bleiben. Die erfindungsgemäße Sonotrodenhalterung deckt somit ein sehr weites Einsatzspektrum ab.

Gemäß einer weiteren vorteilhaften Ausführungsform kann die Aufhängung an einem dem Träger zugewandten Ende zumindest einen Zapfen aufweisen und mittels des Zapfens mit dem Träger verkeilbar sein. Durch die Verkeilung der Sonotrodenhalterung mit dem Träger kann eine einfach herzustellende aber dennoch belastbare Verbindung realisiert werden. Gemäß einer weiteren vorteilhaften Ausführungsform kann der Schwingkörper im Bereich eines Schwingungsknotens mit der Aufhängung verbunden sein. Im Bereich eines Schwingungsknotens ist die Schwingungsamplitude des Schwingkörpers minimal, wodurch lediglich eine minimale, durch die Schwingung hervorgerufene Kraft an die Aufhängung weitergegeben werden kann. Die Aufhängung kann dabei weitgehend von Schwingungen freigehalten werden, wodurch der Träger ebenfalls nur mit sehr geringen Schwingungsamplituden belastet wird. Auf diese Weise kann eine sehr hohe Schwingungsreduzierung zwischen der Sonotrode und dem Träger mittels der erfindungsgemäßen Sonotrodenhalterung erreicht werden.

Es sei angemerkt, dass der Schwingungsknoten dabei nicht zwangsläufig in Schwingungsrichtung gesehen mittig in dem Schwingkörper liegen muss, sondern bei Resonanzen höherer Ordnung auch beispielsweise bei einem Viertel der Länge des Schwingkörpers angeordnet sein kann.

So können bei Resonanzen höherer Ordnung, welche mit mehreren Schwingungsknoten in dem Schwingkörper verbunden sind, auch Aufhängungen vorgesehen werden, welche beispielsweise an einer, zwei, drei, vier, sechs oder acht Stellen mit dem Schwingkörper verbunden sein können. Prinzipiell ist dabei jede Anzahl von Verbindungen zwischen dem Schwingkörper und der Aufhängung denkbar, wobei für jeden Schwingungsknoten zumindest eine Verbindung benötigt wird. Alternativ können für jeden Schwingungsknoten auch zwei Verbindungen vorgesehen werden.

Gemäß einer weiteren vorteilhaften Ausführungsform kann der Schwingkörper im Wesentlichen die gleiche Resonanzfrequenz wie die Sonotrode aufweisen. Somit kann beim Resonanzbetrieb der Sonotrode die Sonotrodenhalterung ohne bzw. mit lediglich geringem Verschleiß betrieben werden, da der in Resonanz befindliche Schwingkörper nur minimale Schwingungsamplituden an die Aufhängung weitergibt.

Die Erfindung betrifft weiterhin ein Sonotrodenhalterungssystem, aufweisend zumindest zwei Sonotrodenhalterungen, welche derart parallel zueinander angeordnet sind, dass deren Langlöcher parallel verlaufen. Die Sonotrodenhalterungen können dabei wahlweise mit oder ohne einen zwischenliegenden Abstand angeordnet werden, sodass eine effektive Tiefe des Sonotrodenhalterungssystems variiert werden kann. Somit können mittels des erfindungsgemäßen Sonotrodenhalterungssystems auch größere Sonotroden befestigt werden, als dies mit einer einzelnen Sonotrodenhalterung möglich wäre.

Bei dem erfindungsgemäßen Sonotrodenhalterungssystem können insbesondere alle Schwingkörper der verwendeten Sonotrodenhalterungen in Resonanz mit der Sonotrode mitschwingen und gestatten so einen nahezu verschleißfreien Betrieb aller Sonotrodenhalterungen eines Sonotrodenhalterungssystems.

Ebenfalls Bestandteil der Erfindung ist eine Sonotrodenanordnung, die wenigstens eine Sonotrode, ein Sonotrodenhalterungssystem, einen Ultraschallkonverter sowie einen Träger, mit welchem das Sonotrodenhalterungssystem verkeilt ist, umfasst. Eine derartige Sonotrodenanordnung kann beispielsweise zum vorstehend erwähnten Ultraschallschweißen eingesetzt werden.

Nachfolgend wird die Erfindung rein beispielhaft anhand möglicher Ausführungsformen unter Bezugnahme auf die beigefügten Zeichnungen beschrieben. Es zeigen in schematischer Darstellung:
- Fig. 1: eine erfindungsgemäße Sonotrodenhalterung in Seitenansicht;
- Fig. 2: eine erfindungsgemäße Sonotrodenanordnung in Seitenansicht.

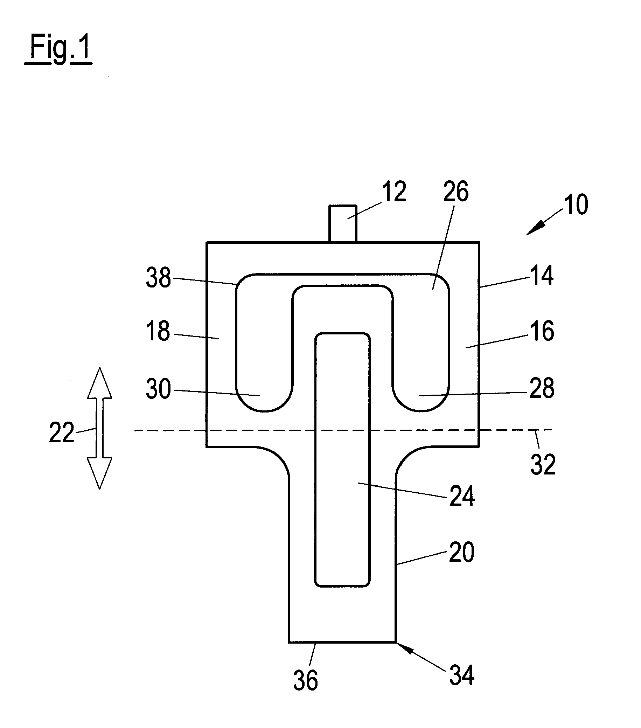

In Fig. 1 ist eine erfindungsgemäße Sonotrodenhalterung 10 in Seitenansicht dargestellt, welche an einem oberen Ende einen Zapfen 12 umfasst, der mit einem (nicht gezeigten) Träger verkeilbar ist. Der Zapfen 12 ist mit einer Aufhängung 14 verbunden, z.B. an diese angeformt, welche eine im Wesentlichen U-förmige Kontur aufweist. Zwischen zwei Schenkeln 16, 18 der Aufhängung 14 erstreckt sich etwa eine Hälfte eines quaderförmigen Schwingkörpers 20, welcher in einer Schwingungsrichtung 22 gesehen mittig mit den Schenkeln 16, 18 der Aufhängung 14 verbunden ist.

Mittig zwischen den Schenkeln 16, 18 ist ein sich in Schwingungsrichtung 22 erstreckendes Langloch 24 angeordnet. Der Schwingkörper 20 und die Aufhängung 14 sind dabei einstückig ausgebildet.

Zwischen dem Schwingkörper 20 und der Aufhängung 14 ist ein Hohlraum bzw. eine U-förmige Freisparung 26 ausgebildet, der in Aussparungen 28, 30 mündet. Sowohl die Freisparung 26 als auch der Schwingkörper 20 weisen abgerundete Ecken auf. Die Aussparungen 28, 30 sind derart angeordnet, dass ein Übergang von dem Schwingkörper 20 zu den Schenkeln 16, 18 der Aufhängung 14 im Wesentlichen symmetrisch bezüglich einer Nulllinie 32 des Schwingkörpers 20 ist. Alternativ können die Aussparungen 28, 30 eine im Wesentlichen tropfenförmige Kontur aufweisen, wodurch ein Übergang zwischen den zwei Enden der Aufhängung 14 und dem Schwingkörper 20 bezüglich deren Kurvenradien im Wesentlichen symmetrisch ausgeführt werden kann. Eine tropfenförmige Ausbildung der Aussparungen 26, 28 ist insbesondere dann möglich, wenn die Aufhängung 14 nahe an dem Schwingkörper 20 angeordnet ist. Eine symmetrische Ausführung verhindert dabei eine Überbelastung einzelner Stellen bzw. einer Seite. Weiterhin kann insbesondere durch die tropfenförmige Kontur ein Übergang zwischen dem Schwingkörper 20 und den Schenkeln 16, 18 geschaffen werden, welcher die Aufnahme hoher Kräfte ermöglicht.

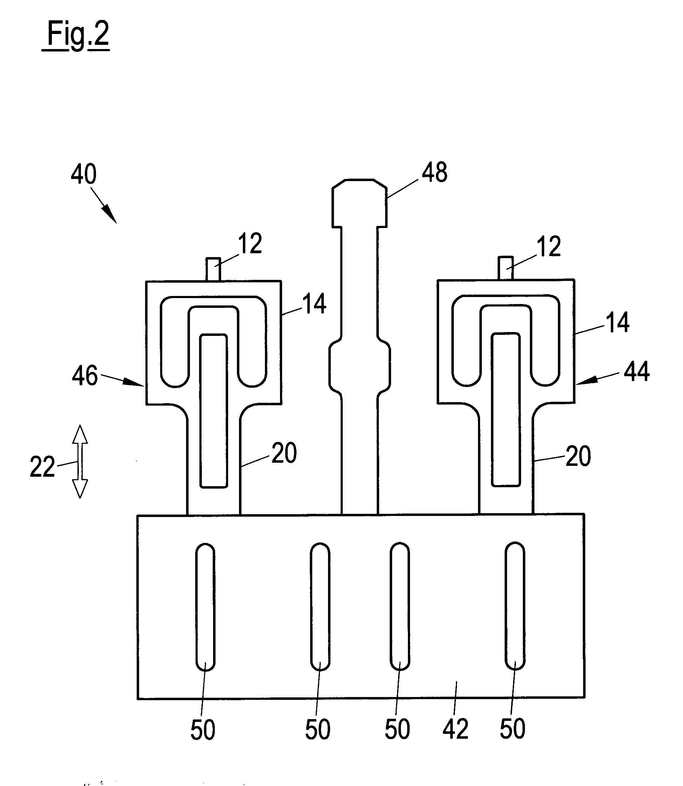

Im Bereich eines unteren Endes 34 des Schwingkörpers 20 ist eine Sonotrodenbefestigung 36 angeordnet, an welcher eine Sonotrode 42 (vgl. Fig. 2) befestigt werden kann.

Beim Betrieb der erfindungsgemäßen Sonotrodenhalterung 10 ist eine schwingende Sonotrode 42 mittels der Sonotrodenbefestigung 36 an dem Schwingkörper 20 befestigt. Die Sonotrode 42 schwingt dabei in Schwingungsrichtung 22 und überträgt diese Schwingungen an den Schwingkörper 20. Wenn der Schwingkörper 20 in Resonanz angeregt wird, ist an dem unteren Ende 34 sowie an einem oberen Ende 38 des Schwingkörpers 20 die Amplitude der Schwingung maximal. Im Bereich der Nulllinie 32 wird die Amplitude und damit die Auslenkung des Materials des Schwingkörpers 20 dagegen minimal. Im Bereich der Nulllinie 32 liegt im Resonanzbetrieb ein Schwingungsknoten vor.

Aufgrund der Freisparung 26 ist eine Schwingung des Schwingkörpers 20 auch zwischen den Schenkeln 16, 18 möglich.

Die Schenkel 16, 18 werden durch den Schwingkörper 20 nur geringfügig zu Schwingungen angeregt, da die Schenkel 16, 18 mit dem Schwingkörper 20 im Bereich der Nulllinie 32 verbunden sind. Die Auslenkung der Schenkel 16, 18 bzw. der gesamten Aufhängung 14 durch die Schwingung des Schwingkörpers 20 ist somit minimal. Über den Zapfen 12 werden somit lediglich minimale Schwingungsamplituden an den Träger weitergegeben.

Fig. 2 zeigt eine schematische Seitenansicht einer erfindungsgemäßen Sonotrodenanordnung 40, welche eine Sonotrode 42 und zwei Sonotrodenhalterungssysteme 44, aufweisend je zwei fluchtend angeordnete Sonotrodenhalterungen 10 umfasst. Weiterhin umfasst die Sonotrodenanordnung 40 einen Ultraschallkonverter 48 sowie einen (nicht gezeigten) Träger, welcher die Sonotrodenhalterungssysteme 44, 46 und den Ultraschallkonverter 48 befestigt.

Sowohl die Sonotrodenhalterungssysteme 44, 46, als auch der Ultraschallkonverter 48 greifen an einem oberen Ende der Sonotrode 42 in einer Ebene an die Sonotrode 42 an. Die Sonotrode 42 umfasst Langlöcher 50 und weist vorzugsweise in Schwingungsrichtung 22 gesehen in etwa die gleiche Länge wie die Schwingkörper 20 auf.

Optional können die Sonotrode 42 und die Sonotrodenhalterung 10, in Schwingungsrichtung 22 gesehen, mit gleichen Längen ausgebildet sein. Die Sonotrodenhalterung 10 kann somit im Wesentlichen die gleiche Resonanzfrequenz wie die Sonotrode 42 aufweisen.

Die Sonotrodenhalterungssysteme 44, 46 sind mittels Zapfen 12 mit dem nicht gezeigten Träger verkeilt.

Im Betrieb erzeugt der Ultraschallkonverter 48 eine mechanische Schwingung mit der Resonanzfrequenz der Sonotrode 42. Diese Schwingung wird in die Sonotrode 42 eingeleitet, wodurch die Sonotrode 42 in Resonanz zu schwingen beginnt. Die Schwingungen der Sonotrode 42 werden wiederum an die Schwingkörper 20 der Sonotrodenhalterungssysteme 44, 46 weitergegeben. Aufgrund der Befestigung der Schwingkörper 20 an einem Schwingungsknoten wird die Schwingung der resonant schwingenden Schwingkörper 20 stark gedämpft an die Aufhängungen 14 der Sonotrodenhalterungssysteme 44, 46 und damit im Wesentlichen nicht an den Träger weitergegeben. Die Belastungen durch die Sonotrode 42 verteilen sich dabei auf die einzelnen Sonotrodenhalterungen 10 der Sonotrodenhalterungssysteme 44, 46.

Die erfindungsgemäße Sonotrodenanordnung 40 ermöglicht somit einen Betrieb der Sonotrode 42 bei sehr starken mechanischen Belastungen, wobei trotz der Belastung eine genaue Führung der Sonotrode 42 durch die erfindungsgemäßen Sonotrodenhalterungen 10 bzw. die erfindungsgemäßen Sonotrodenhalterungssysteme 44, 46 gewährleistet wird.

### Bezugszeichenliste

- 10: Sonotrodenhalterung
- 12: Zapfen
- 14: Aufhängung
- 16: Schenkel
- 18: Schenkel
- 20: Schwingkörper
- 22: Schwingungsrichtung
- 24: Langloch
- 26: Freisparung
- 28: Aussparung
- 30: Aussparung
- 32: Nulllinie
- 34: unteres Ende
- 36: Sonotrodenbefestigung
- 38: oberes Ende
- 40: Sonotrodenanordnung
- 42: Sonotrode
- 44: Sonotrodenhalterungssystem
- 46: Sonotrodenhalterungssystem
- 48: Ultraschallkonverter
- 50: Langloch

## Patentansprüche

1. Sonotrodenhalterung (10) zur schwingfähigen Befestigung einer Sonotrode (42) an einem Träger, wobei eine Schwingungsrichtung (22) von dem Träger zur Sonotrode (42) verläuft,
**dadurch gekennzeichnet, dass** die Sonotrodenhalterung (10) zumindest einen Schwingkörper (20) mit zumindest einer Aussparung (24) aufweist, wobei der Schwingkörper (20) an einem Ende mit der Sonotrode (42) verbunden ist und eine Aufhängung (14) aufweist, die zur Befestigung an dem Träger ausgebildet ist.

2. Sonotrodenhalterung (10) nach Anspruch 1,
**dadurch gekennzeichnet, dass** der Schwingkörper (20) quaderförmig ausgebildet ist.

3. Sonotrodenhalterung (10) nach Anspruch 1 oder 2,
**dadurch gekennzeichnet, dass** die Aussparung ein sich in Schwingungsrichtung (22) erstreckendes Langloch (24) ist.

4. Sonotrodenhalterung (10) nach einem der vorstehenden Ansprüche,
**dadurch gekennzeichnet, dass** die Aufhängung (14) im Wesentlichen U-förmig ausgebildet ist und die beiden Schenkel (16, 18) der U-förmigen Aufhängung (14) in Schwingungsrichtung (22) gesehen etwa in der Mitte des Schwingkörpers (20) mit diesem verbunden sind.

5. Sonotrodenhalterung (10) nach einem der vorstehenden Ansprüche ,
**dadurch gekennzeichnet, dass** die Aussparung (24) etwa mittig zwischen den zwei Enden der Schenkel (16, 18) der U-förmigen Aufhängung (14) in dem Schwingkörper (20) angeordnet ist.

6. Sonotrodenhalterung (10) nach einem der vorstehenden Ansprüche,
**dadurch gekennzeichnet, dass** die Aufhängung (14) und der Schwingkörper (20) einstückig ausgebildet sind.

7. Sonotrodenhalterung (10) nach einem der vorstehenden Ansprüche,
**dadurch gekennzeichnet, dass** die Aufhängung (14) in einem Bereich von zwei Enden der Aufhängung jeweils eine Aussparung (28, 30) umfasst.

8. Sonotrodenhalterung (10) nach Anspruch 7,
**dadurch gekennzeichnet, dass** zwischen dem Schwingkörper (20) und der Aufhängung (14) ein im Wesentlichen U-förmig ausgebildeter Hohlraum (26) angeordnet ist, wobei der Hohlraum (26) die Aussparungen (28, 30) der Aufhängung (14) umfasst.

9. Sonotrodenhalterung (10) nach einem der vorstehenden Ansprüche,
**dadurch gekennzeichnet, dass** der Schwingkörper (20) in Schwingungsrichtung (22) gesehen im Wesentlichen die gleiche Länge aufweist wie die Sonotrode (42).

10. Sonotrodenhalterung (10) nach einem der vorstehenden Ansprüche,
**dadurch gekennzeichnet, dass** die Aufhängung (14) an einem dem Träger zugewandten Ende zumindest einen Zapfen (12) aufweist und mittels des Zapfens (12) mit dem Träger verkeilbar ist.

11. Sonotrodenhalterung (10) nach einem der vorstehenden Ansprüche,
**dadurch gekennzeichnet, dass** der Schwingkörper (20) im Bereich eines Schwingungsknotens (32) mit der Aufhängung (14) verbunden ist.

12. Sonotrodenhalterung (10) nach einem der vorstehenden Ansprüche,
**dadurch gekennzeichnet, dass** der Schwingkörper (20) im Wesentlichen die gleiche Resonanzfrequenz wie die Sonotrode (42) aufweist.

13. Sonotrodenhalterungssystem (44, 46) aufweisend zumindest zwei Sonotrodenhalterungen (10) gemäß einem der vorstehenden Ansprüche, welche derart parallel zueinander angeordnet sind, dass deren Langlöcher (24) parallel verlaufen.

14. Sonotrodenanordnung (40), die wenigstens eine Sonotrode (42), ein Sonotrodenhalterungssystem (44, 46) gemäß Anspruch 13, einen Ultraschallkonverter (48) sowie einen Träger, mit welchem das Sonotrodenhalterungssystem (44, 46) verkeilt ist, umfasst.
